# EUROPEAN PATENT APPLICATION

(11) **EP 4 534 605 A1**
(43) Date of publication of application: **09.04.2025**
(21) Application number: 23811573.7
(22) Date of filing: 02.05.2023
(51) Int. Cl.: C08L 101/00, C08K 5/00, C08L 29/04

(54) **RESIN COMPOSITION AND DISPERSION COMPRISING METAL-ORGANIC FRAMEWORK**

(30) Priority: 26.05.2022 JP 2022086236
(71) Applicant: Toyo Seikan Group Holdings, Ltd., Shinagawa-ku Tokyo 141-8627 (JP)
(72) Inventor: TSURUTA, Kazuhiro, Yokohama-shi, Kanagawa 240-0062 (JP); MIYAI, Tomohiro, Yokohama-shi, Kanagawa 240-0062 (JP)
(74) Representative: J A Kemp LLP
(86) International application number: PCT/JP2023/017137
(87) International publication number: WO 2023/228696

(57) **Abstract**

The present invention relates to a resin composition and dispersion containing a metal-organic framework. The metal-organic framework has a cyclic structure or a cage-like structure in which at least one type of organic ligand is coordinated to at least one type of metal ion, and the metal-organic framework is uniformly dispersed in a resin or in a dispersion medium, thereby exhibiting excellent adsorption performance.

## Description

### Technical Field

The present invention relates to a resin composition and a dispersion containing a metal-organic framework, and more particularly, to a resin composition and a dispersion in which a metal-organic framework is uniformly dispersed in a resin or in a dispersion medium, capable of exhibiting excellent adsorption performance of the metal-organic framework.

### Background Art

A metal-organic framework (MOF) including a central metal and a multidentate organic ligand coordinated to this central metal is a porous three-dimensional structure configured of the accumulation of metal complexes each including a central metal and an organic ligand. The pore included in the metal-organic framework can be easily designed for its pore diameter and the space inside the pore as compared with other porous materials such as zeolite and activated carbon, and the metal-organic framework has pores with a uniform pore diameter, and therefore the metal-organic framework is proposed to be used as an adsorbent.

For example, Patent Document 1 set forth below proposes a transparent gas barrier water-absorbent laminate including a base material layer and a sealant layer, wherein the base material layer contains a transparent gas barrier film, the sealant layer contains a water absorbent and a heat-sealable resin, the water absorbent contains an inorganic water absorbent and/or an organic water absorbent, and a content of the water absorbent in the layer containing the water absorbent is 0.5 mass% or more and 70 mass% or less, and it is described that a metal-organic framework can be used as one of the inorganic water absorbents.

Patent Document 2 set forth below proposes a gas absorbing film containing a thermoplastic resin and a gas absorbent, wherein the gas absorbent contains a gas physical absorbent and/or a gas chemical absorbent, the BET specific surface area of the gas physical absorbent is 50 m²/g or more and 4000 m²/g or less, and the content of the gas absorbent is 0.5 mass% or more and 30 mass% or less in a layer containing the gas absorbent, and it is described that a metal-organic framework can be used as one of the gas physical absorbent in the gas absorbing film.

### Citation List

### Patent Literature

Patent Document 1: JP 2021-053946 A
Patent Document 2: JP 2021-054490 A

### Summary of Invention

### Technical Problem

In Patent Documents 1 and 2, a specific metal-organic framework such as copper trimesate, iron trimesate, aluminum terephthalate, or zinc 2-methylimidazole is blended in a thermoplastic resin and used as an inorganic water absorbent or a gas physical absorbent.

In general, however, it is not easy to uniformly disperse powdery metal-organic frameworks in a resin, and agglomerate may be present in a film or the like obtained from a resin composition containing the metal-organic frameworks, and in such a case, there is concern that the metal-organic frameworks cannot sufficiently exhibit their excellent adsorption performance.

Therefore, an object of the present invention is to provide a resin composition and a dispersion containing metal-organic frameworks, in which the metal-organic frameworks are uniformly dispersed in a resin or in a dispersion medium, thereby exhibiting excellent adsorption performance.

### Solution to Problem

According to the present invention, there is provided a resin composition containing a metal-organic framework and a dispersant in a resin, the metal-organic framework being characterized by having a cyclic structure or a cage-like structure in which at least one type of organic ligand is coordinated to at least one type of metal ion.

In the resin composition of the present invention, the following are suitable:
(1) the dispersant is at least one selected from polyvinyl alcohol, an amino acid, phosphoric acid, or polyallylamine;
(2) a content ratio (mass ratio) of the metal-organic framework to the dispersant is from 1:1 to 1:10;
(3) the metal-organic framework, in which the metal ion is a zinc ion, and the organic ligand includes a compound having an imidazole skeleton, is at least contained;
(4) the compound having an imidazole skeleton is 2-methylimidazole;
(5) the metal-organic framework, in which the metal ion is an alkali metal ion, and the organic ligand includes a cyclodextrin-based compound, is at least contained;
(6) the alkali metal ion is a potassium ion;
(7) the cyclodextrin-based compound is α-cyclodextrin or γ-cyclodextrin;
(8) the metal-organic framework, in which the metal ion is a copper ion, and the organic ligand includes a compound having a monocyclic or polycyclic skeleton, is at least contained; and
(9) the compound having a monocyclic or polycyclic skeleton is trimesic acid.

The present invention also provides a dispersion that contains a metal-organic framework and a dispersant, where the metal-organic framework is characterized by being a cyclic or cage-like metal-organic framework in which at least one type of organic ligand is coordinated to at least one type of metal ion.

In the dispersion of the present invention, the following are suitable:
(1) the dispersant is at least one selected from polyvinyl alcohol, an amino acid, phosphoric acid, or polyallylamine;
(2) a content ratio (mass ratio) of the metal-organic framework to the dispersant is from 1:1 to 1:30;
(3) a dispersion medium is water and/or an alcohol solvent;
(4) the metal-organic framework, in which the metal ion is a zinc ion, and the organic ligand includes a compound having an imidazole skeleton, is at least contained;
(5) the compound having an imidazole skeleton is 2-methylimidazole;
(6) the metal-organic framework, in which the metal ion is an alkali metal ion, and the organic ligand includes a cyclodextrin-based compound, at least is contained;
(7) the alkali metal ion is a potassium ion;
(8) the cyclodextrin-based compound is α-cyclodextrin or γ-cyclodextrin;
(9) the metal-organic framework, in which the metal ion is a copper ion, and the organic ligand includes a compound having a monocyclic or polycyclic skeleton, at least is contained; and
(10) the compound having a monocyclic or polycyclic skeleton is trimesic acid.

### Advantageous Effects of Invention

In the resin composition and the dispersion of the present invention, a specific dispersant together with a metal-organic framework is contained in a resin or in a dispersion medium, which enables the metal-organic frameworks to be uniformly dispersed without agglomerating in the resin or in the dispersion, thereby exhibiting excellent adsorption performance that the metal-organic frameworks have in the resin composition and in the dispersion.

### Description of Embodiments

### Metal-organic framework

The metal-organic framework contained in the resin composition and in the dispersion of the present invention has a porous crystal structure of a cyclic structure or of a cage-like structure, in which at least one type of organic ligand is coordinated to at least one type of metal ion, and the space structures inside this crystal are uniform and hence can efficiently encapsulate guest molecules, which allows excellent adsorption performance to be exhibited.

Note that, as for the cyclic structure or the cage-like structure of the metal-organic framework used in the present specification, the cage-like structure is defined as a cubic crystal structure that is obtained from further progression of crystallization of the metal-organic framework having a cyclic structure using the organic ligand with the metal ion as a linker.

The metal ion in the metal-organic framework needs to be any metal ion capable of forming a coordinate bond with an organic ligand, and examples thereof include, but not limited to, metal ions of Li, Na, K, Rb, Be, Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb, and Bi, and at least one type therefrom can be chosen.

The organic ligand needs to be any compound capable of forming a coordinate bond with a metal ion, and a compound having a functional group that is coordinate-bonded to a metal can be used. Examples of such functional group include a hydroxyl group, an imidazole group, a pyridyl group, a carboxyl group, a sulfonate group, and an amide group.

Specifically, as the organic ligand can be used an organic compound having a cyclic structure in which the organic ligand per se can encapsulate a guest molecule. Examples of such organic ligand include cyclodextrin-based compounds. Examples of the cyclodextrin-based compound include α-cyclodextrin, β-cyclodextrin, and γ-cyclodextrin, and among them, α-cyclodextrin and γ-cyclodextrin can be suitably used.

As the organic ligand, a compound having an imidazole skeleton such as imidazole, 2-methylimidazole, or 2-formylimidazole, a compound having a monocyclic or polycyclic skeleton such as terephthalic acid or trimesic acid, or the like can also be used. Unlike the organic compound having a cyclic structure, these compounds per se cannot encapsulate a guest molecule, but can be coordinate-bonded to a metal ion to form a metal-organic framework having a cyclic structure or a cage-like structure that can encapsulate a guest molecule.

Specific examples of the metal-organic frameworks that can be suitably used in the resin composition and in the dispersion of the present invention include the following.

There can be suitably used a metal-organic framework in which the metal ion is a zinc ion and the organic ligand includes a compound having an imidazole skeleton, particularly a metal-organic framework (ZIF-8) in which the organic ligand is 2-methylimidazole, a metal-organic framework in which the metal ion is an alkali metal ion and the organic ligand includes a cyclodextrin-based compound, particularly a metal-organic framework (α-CDMOF or γ-CDMOF) in which the metal ion is a potassium ion and the organic ligand is α-cyclodextrin or γ-cyclodextrin, a metal-organic framework in which the metal ion is a copper ion and the organic ligand includes a compound having a monocyclic or polycyclic skeleton, particularly a metal-organic framework (C-300) in which the organic ligand is trimesic acid. In the present invention, among the metal-organic frameworks, CDMOF can be suitably used.

In the metal-organic framework (CDMOF) to be suitably used for the resin composition and for the dispersion of the present invention, in which a cyclodextrin-based compound as the organic ligand and a potassium ion as the metal ion are contained, the metal-organic framework in which the cyclodextrin-based compound binds from 0.05 to 0.8 mol per 1 mol of potassium ion is suitable for exhibiting excellent adsorption performance.

### Method of producing metal-organic framework

A known commercially available metal-organic framework can also be used for the metal-organic framework to be used in the present invention, but the metal-organic framework can be produced by the following method.

That is, there is prepared a first aqueous solution that contains a metal ion and an organic ligand capable of coordinating to the metal ion, and then a second solvent that contains an organic solvent is added to this first aqueous solution and thereby producing a metal-organic framework in which the organic ligand is coordinated to the metal ion.

Examples of the metal compound that supplies metal ions in the first aqueous solution include, but not limited to, metal hydroxides, inorganic halide salts such as a chloride salt, and inorganic acid salts such as a nitrate salt and an acetate salt. Specifically, a hydroxide of an alkali metal is suitably used when the metal ion is an alkali metal ion, and an inorganic acid salt is preferably used when the metal ion is a Zn ion or an Fe ion.

In the first aqueous solution, it is desirable that the amount of the organic ligand per 1 mol of the metal ion is preferably within a range from 0.05 to 50 mol, suitably within a range from 0.1 to 40 mol, and more suitably within a range from 0.125 to 30 mol.

When the metal ion is an alkali metal ion, the amount of the organic ligand per 1 mol of the metal ion is preferably within a range from 0.05 to 8 mol, and particularly preferably within a range from 0.125 to 0.8 mol.

When the metal ion is a Zn ion, the amount of the organic ligand per 1 mol of the Zn ion is preferably within a range from 0.5 to 50 mol, and particularly preferably within a range from 15 to 40 mol.

When the metal ion is an Fe ion, the amount of the organic ligand per 1 mol of the Fe ion is preferably within a range from 0.05 to 5 mol, and particularly preferably within a range from 0.1 to 1 mol.

The amount of water in the first aqueous solution is preferably within a range from 10 to 5000 mol per 1 mol of the metal ion, and when the metal ion is an alkali metal ion, the amount of water is preferably within a range from 50 to 200 mol, and particularly preferably within a range from 100 to 150 mol, per 1 mol of the metal ion.

The molar ratio of the organic ligand to water (organic ligand:water) is preferably within a range from 1: 10 to 1:2000, and the molar ratio is desirably within a range from 1: 100 to 1:1300 particularly when the organic ligand is a cyclodextrin-based compound.

The second solution to be added to the first aqueous solution prepared as described above is preferably a solution capable of lowering the pH of the first aqueous solution, and it is preferable to use an organic solvent capable of deprotonation of the coordinate binding site of the organic ligand. The organic ligand is deprotonated to form a coordinate bond with the metal ion and thereby producing a metal-organic framework.

As such an organic solvent, mention may be made of at least one solvent selected from alcohol solvents such as methanol, ethanol, 1-propanol, and 1-butanol, ketone solvents such as acetone, and aprotic solvents such as N-N-dimethylformamide, and among them, an alcohol solvent is preferable, and in particular, methanol can be suitably used.

The organic solvent is suitably added within a range from 3 to 1000 mol, particularly within a range from 5 to 500 mol, per 1 mol of the metal ion. In particular, when the metal ion is a potassium ion and the organic ligand is α-cyclodextrin, it is suitable that the organic solvent is added in an amount within a range from 10 to 400 mol, preferably from 50 to 300 mol, more preferably from 100 to 200 mol, per 1 mol of potassium ion, and when the metal ion is γ-cyclodextrin, it is suitable that the organic solvent is added in an amount within a range from 3 to 100 mol, preferably from 5 to 50 mol, more preferably from 10 to 30 mol, per 1 mol of potassium ion.

The addition of the second solution into the first aqueous solution is preferably conducted such that the second solution is added over a period of time of from 1 to 20 minutes, preferably from 10 to 15 minutes while the first aqueous solution being stirred. When all of the second solution is added at once, there is concern that cloudiness may occur and a desired metal-organic framework cannot be obtained; however, when the second solution is added over a period of time within the range set forth above, nuclei are formed and crystal structures can be grown, and a desired metal-organic framework is easily obtained. Examples of the addition method include, but not limited to, a method of adding at a constant rate with a dropping funnel, a method of adding a constant amount at regular intervals, and a method of adding by varying the amount added in a gradient manner.

After completion of the addition of the second solution, the mixed solution is preferably stirred at room temperature for a period of time of from 5 to 50 hours, preferably for a period of time of from 10 to 30 hours. The produced metal-organic framework is isolated by filtration or the like, washed with an organic solvent such as methanol as necessary, and then dried to remove the organic solvent and water, thereby enabling to obtain powder of the metal-organic framework having a cyclic structure or a cage-like structure.

### Dispersant

**In** the resin composition and the dispersion of the present invention, as the dispersant to be added in order to improve the dispersibility of the above-described metal-organic framework in the resin or in the dispersion, there can be used at least one selected from a water-soluble polymer such as polyvinyl alcohol, an amino acid compound including an α-amino acid such as glycine, lysine, or aspartic acid, a phosphoric acid compound such as orthophosphoric acid, metaphosphoric acid, or polyphosphoric acid, and a polyamine compound such as polyallylamine. Among them, polyvinyl alcohol, an amino acid, phosphoric acid, or polyallylamine can be suitably used.

### Resin composition

The resin composition of the present invention contains the above-described metal-organic framework and dispersant in the resin.

As the resin that contains the metal-organic framework, a known resin can be used, and examples thereof include, but not limited to, thermoplastic resins including olefin resins such as low-, medium-, and high-density polyethylene, linear low-density polyethylene, linear ultra-low-density polyethylene, isotactic polypropylene, syndiotactic polypropylene, propylene-ethylene copolymer, polybutene-1, ethylene-butene-1 copolymer, propylene-butene-1 copolymer, and ethylene-propylene-butene-1 copolymer, polyester resins such as polyethylene terephthalate, polybutylene terephthalate, and polyethylene naphthalate, polyamide resins such as nylon 6, nylon 6,6, and nylon 6,10, and polycarbonate resins, and thermosetting resins such as phenol resin, epoxy resin, urethane resin, melamine resin, urea resin, alkyd resin, unsaturated polyester resin, and silicone resin, and photocurable acrylic resins.

In the resin composition of the present invention, the resin serving as a matrix is preferably a resin having excellent gas permeability in order that the metal-organic frameworks in the resin composition can efficiently exhibit adsorption performance, and hence low-density polyethylene can be suitably used especially among the resins set forth above.

In the resin composition, the content of the metal-organic framework varies depending on the type of the metal-organic framework to be used, the intended use, and the like and cannot be unconditionally defined, but the metal-organic framework is particularly contained in an amount of from 0.01 to 50 parts by mass, particularly from 0.05 to 10 parts by mass, per 100 parts by mass of the resin. When the amount of the metal-organic framework is smaller than the range set forth above, there is concern that desired adsorptive property cannot be obtained, whereas when the amount of the metal-organic framework is larger than the range set forth above, there is concern that moldability in molding the resin composition into a desired form may be compromised.

In addition, it is suitable that the content ratio (mass ratio) of the metal-organic framework to the dispersant in the resin composition is from 1:1 to 1: 10, and particularly from 1:3 to 1:8. When the content of the dispersant is smaller than the range set forth above, sufficient improvement of the dispersibility of metal-organic frameworks is difficult as compared with the case where the content is within the range set forth above, whereas when the content of the dispersant is larger than the range set forth above, there is concern that moldability in molding the resin composition into a desired form may be compromised.

The resin composition may contain a known additive for resins, such as an antioxidant or a filler, besides the metal-organic framework and the dispersant.

The preparation of the resin composition can be conducted by a known method, and is not limited to the following, but the preparation can be made by a method in which a metal-organic framework and a dispersant are dry-blended with a resin, a method in which a metal-organic framework and a dispersant are added to and blended with a resin in a molten state, etc.; however, by a method in which a dispersion that contains the metal-organic framework and the dispersant of the present invention described later is used and this dispersion is added to a resin in a molten state followed by melt-kneading, a resin composition in which metal-organic frameworks are uniformly dispersed in a resin can be efficiently prepared.

The resin composition of the present invention can be molded into various forms depending on its intended use, and can also be molded into a form such as a cup, a tray, a bottle, or a tube, besides a pellet form, a film form, a sheet form, etc.

### Dispersion

The dispersion of the present invention is a liquid in which the above-described metal-organic frameworks and dispersants are uniformly dispersed in a dispersion medium.

Examples of the dispersion medium used in the dispersion include water, alcohol solvents such as methanol, ethanol, and isopropanol, ketone solvents such as 2-butanone and acetone, and aromatic solvents such as toluene, and in particular, water and/or an alcohol solvent can be suitably used.

In the dispersion, the content of the metal-organic framework varies depending on the types of the metal-organic framework and the dispersion medium to be used, the content of the dispersant, and the like, and cannot be unconditionally defined, but the metal-organic framework is preferably contained within a range from 0.01 to 30 g/L, particularly within a range from 10 to 20 g/L. When the amount of the metal-organic frameworks is smaller than the range set forth above, there is concern that desired adsorptive property cannot be achieved, and there is also concern that the handling when adding the metal-organic framework to the resin may be difficult as compared with the case where the amount of the metal-organic frameworks is within the range set forth above, whereas when the amount of the metal-organic frameworks is larger than the range set forth above, there is concern that a uniform dispersion of the metal-organic frameworks may become difficult as compared with the case where the amount of the metal-organic frameworks is within the range set forth above.

In addition, it is suitable that the content ratio (mass ratio) of the metal-organic framework to the dispersant in the dispersion is from 1:1 to 1:30, and particularly from 1:5 to 1:20. When the content of the dispersant is smaller than the range set forth above, sufficient improvement of the dispersibility of the metal-organic frameworks is difficult as compared with the case where the content of the dispersant is within the range set forth above, whereas even when the content of the dispersant is larger than the range set forth above, further improvement of the dispersibility cannot be expected, and instead there is concern that the ease of handling of the dispersion may be compromised.

The preparation of the dispersion is not limited to, but can be performed by the following method. That is, a dispersant is added and mixed to a solvent and the mixture is stirred to prepare a dispersant-containing solution in advance, and a metal-organic framework is added to this dispersant-containing solution and a dispersion treatment is conducted, so that a dispersion in which the metal-organic frameworks are uniformly dispersed can be prepared.

The dispersion treatment is preferably conducted by a stirring method with a stir rod, a stir stone, or the like, but can also be conducted with a disperser such as an ultrasonic disperser, a homogenizer, or a mixer.

The dispersion of the present invention can be used as it is as an adsorbent or the like, but can be suitably used for preparing a resin composition containing the above-described metal-organic frameworks.

### Examples

Hereinafter, examples conducted by the present inventors will be described in order to describe the present invention in more detail.

### Measurement method

### Adsorption test for adsorbent-containing resin composition

Into a flask filled with 200 ppm octane was loaded 2 g of the resin composition to prepare an adsorption sample. The gas component concentration one hour after the adsorption sample loading was measured with the following detector tube.

### Octane concentration: detector tube (No. 105 available from GASTEC CORPORATION)

### Evaluation method for stability over time in dispersion

The conditions 30 minutes after and 3 days after the preparation of the dispersion were visually checked. If no precipitate was observed 3 days after, the sample was rated as ∘ (highly stabile over time), if a precipitate was observed after 30 minutes by the end of 3 days passed, the sample was rated as △ (moderately stabile over time), and if a precipitate was observed 30 minutes after, the sample was rated as × (poorly stabile over time).

### Preparation of resin composition

### Example 1

The following raw materials were mixed to give an adsorbent-containing resin composition.
LDPE (Novatic LC600A): 93.3 parts
Polyallylamine (PAA: Average molecular weight M.W. was 5000): 6.0 parts
ZIF-8 (available from Aldrich): 0.7 parts

Then, 1 g of the resin composition prepared above was formed into a film having an average film thickness of 0.2 mm by using a pressing machine.

The prepared film was dried at 140°C for 3 hours, and then 1 g of the film was loaded into a flask filled with 200 ppm octane to prepare an adsorption sample. The gas component concentration 1 hour after the adsorption sample loading was measured with a detector tube. The adsorption test was conduct and the film including the gas adsorbent-containing resin composition was found to adsorb 200 ppm octane.

### Comparative Example 1

The following materials were mixed to give a resin composition.

### LDPE (Novatic LC600A): 100 parts

Then, 1 g of the resin composition prepared above was formed into a film having an average film thickness of 0.2 mm by using a pressing machine.

The adsorption measurement test was conducted in the same manner as in Example 1, and the film was found to adsorb 20 ppm octane.

### Comparative Example 2

The following materials were mixed to give a resin composition.
LDPE (Novatic LC600A): 94.0 parts
PAA: 6.0 parts

Then, 1 g of the resin composition prepared above was formed into a film having an average film thickness of 0.2 mm by using a pressing machine.

The adsorption measurement test was conducted in the same manner as in Example 1, and that the film was found to adsorb 45 ppm octane.

### Preparation of dispersion

### Example 2

Into 88 parts by mass of pure water were added 2 parts by mass of PAA as the dispersant and 1 part by mass of ZIF-8 as the metal-organic framework, and the mixture was stirred at room temperature for 10 minutes to give a dispersion A.

The stability over time of the dispersion A was rated as ∘.

### Example 3

A dispersion B was obtained in the same manner as in Example 2 except that the composition ratio (in parts by mass) was such that pure water:PAA:ZIF-8 = 88:5:1.

The stability over time of the dispersion B was rated as ∘.

### Example 4

A dispersion C was obtained in the same manner as in Example 2 except that the composition ratio (in parts by mass) was such that pure water:PAA:ZIF-8 = 88:10:1.

The stability over time of the dispersion C was rated as ∘.

### Example 5

A dispersion D was obtained in the same manner as in Example 2 except that the composition ratio (in parts by mass) was such that pure water:PAA:ZIF-8 = 88:20:1.

The stability over time of the dispersion D was rated as △.

### Example 6

A dispersion E was obtained in the same manner as in Example 2 except that polyvinyl alcohol (PVA: Average molecular weight M.W. was from 900 to 1100) was used as the dispersant, and the composition ratio (in parts by mass) was such that pure water:PVA:ZIF-8 = 169:1.7:1.

The stability over time of the dispersion E was rated as △.

### Example 7

A dispersion F was obtained in the same manner as in Example 2 except that glycine was used as the dispersant and the composition ratio (in parts by mass) was such that pure water:glycine:ZIF-8 = 298:33:1.

The stability over time of the dispersion F was rated as ∘.

### Example 8

A dispersion G was obtained in the same manner as in Example 2 except that lysine was used as the dispersant and the composition ratio (in parts by mass) was such that pure water:lysine:ZIF-8 = 298:33:1.

The stability over time of the dispersion G was rated as △.

### Example 9

A dispersion H was obtained in the same manner as in Example 2 except that magnesium aspartate was used as the dispersant and the composition ratio (in parts by mass) was such that pure water:magnesium aspartate:ZIF-8 = 298:33:1.

The stability over time of the dispersion H was rated as △.

### Example 10

A dispersion I was obtained in the same manner as in Example 2 except that phosphoric acid was used as the dispersant and the composition ratio (in parts by mass) was such that pure water:phosphoric acid:ZIF-8=356:2.7:1.

The stability over time of the dispersion I was rated as ∘.

### Example 11

A dispersion J was obtained in the same manner as in Example 4 except that PAA was used as the dispersant and α-CDMOF was used as the metal-organic framework.

The stability over time of the dispersion J was rated as ∘.

Note that the preparation of α-CDMOF was carried out as follows.

Pure water was added to a 150 ml container (mayonnaise bottle), and then potassium hydroxide was added into the container and dissolved at room temperature. Furthermore, α-cyclodextrin was added thereto and dissolved at room temperature. Next, methanol was added dropwise to this solution over about 15 minutes while the solution was stirred with a stir bar. After addition, the solution was stirred for 24 hours to yield a suspension containing a solid product. The solid product was separated by filtration from the resultant suspension, and the isolated solid product was washed with methanol. After washing, the solid product was dried at 50°C overnight to afford α-CDMOF according to Example 11. The molar ratio of the components used was such that potassium ion:α-cyclodextrin:water:methanol = 1:0.125:137.5:184.

### Example 12

A dispersion K was obtained in the same manner as in Example 6 except that PVA was used as the dispersant and the α-CDMOF was used as the metal-organic framework.

The stability over time of the dispersion K was rated as ∘.

### Example 13

A dispersion L was obtained in the same manner as in Example 8 except that lysine was used as the dispersant and the α-CDMOF was used as the metal-organic framework.

The stability over time of the dispersion L was rated as ∘.

### Example 14

A dispersion M was obtained in the same manner as in Example 9 except that magnesium aspartate was used as the dispersant and the α-CDMOF was used as the metal-organic framework.

The stability over time of the dispersion M was rated as ∘.

### Example 15

A dispersion N was obtained in the same manner as in Example 4 except that PAA was used as the dispersant and γ-CDMOF was used as the metal-organic framework.

The stability over time of the dispersion N was rated as ∘.

Note that, the preparation of γ-CDMOF was conducted according to the following.

Pure water was added to a 150 ml container (mayonnaise bottle), and then potassium hydroxide was added into the container and dissolved at room temperature. Furthermore, α-cyclodextrin was added thereto and dissolved at room temperature. Next, methanol was added dropwise to this solution over about 15 minutes while the solution was stirred with a stir bar. After addition, the solution was stirred for 24 hours to yield a suspension containing a solid product. The solid product was separated by filtration from the resultant suspension, and the isolated solid product was washed with methanol. After washing, the solid product was dried at 50°C overnight to afford γ-CDMOF according to Example 15. The molar ratio of the components used was such that potassium ion:γ-cyclodextrin:water:methanol = 1:0.125:137.5:20.

### Example 16

A dispersion O was obtained in the same manner as in Example 6 except that PVA was used as the dispersant and the γ-CDMOF was used as the metal-organic framework.

The stability over time of the dispersion O was rated as ∘.

### Example 17

A dispersion P was obtained in the same manner as in Example 7 except that glycine was used as the dispersant and the γ-CDMOF was used as the metal-organic framework.

The stability over time of the dispersion P was rated as ∘.

### Example 18

A dispersion Q was obtained in the same manner as in Example 8 except that lysine was used as the dispersant and the γ-CDMOF was used as the metal-organic framework.

The stability over time of the dispersion Q was rated as ∘.

### Example 19

A dispersion R was obtained in the same manner as in Example 9 except that magnesium aspartate was used as the dispersant and the γ-CDMOF was used as the metal-organic framework.

The stability over time of the dispersion R was rated as ∘.

### Example 20

A dispersion S was obtained in the same manner as in Example 7 except that glycine was used as the dispersant and C300 (available from Aldrich) was used as the metal-organic framework.

The stability over time of the dispersion S was rated as ∘.

### Example 21

A dispersion T was obtained in the same manner as in Example 8 except that lysine was used as the dispersant and C300 (available from Aldrich) was used as the metal-organic framework.

The stability over time of the dispersion T was rated as ∘.

### Example 22

A dispersion U was obtained in the same manner as in Example 9 except that magnesium aspartate was used as the dispersant and C300 (available from Aldrich) was used as the metal-organic framework.

The stability over time of the dispersion U was rated as ∘.

## Claims

1. A resin composition, comprising a metal-organic framework and a dispersant in a resin, the metal-organic framework being a metal-organic framework having a cyclic structure or a cage-like structure in which at least one type of organic ligand is coordinated to at least one type of metal ion.

2. The resin composition according to claim 1, wherein the dispersant is at least one selected from polyvinyl alcohol, an amino acid, phosphoric acid, or polyallylamine.

3. The resin composition according to claim 1, wherein a content ratio (mass ratio) of the metal-organic framework to the dispersant is from 1:1 to 1:10.

4. The resin composition according to claim 1, wherein the resin composition comprises at least the metal-organic framework in which the metal ion is a zinc ion, and the organic ligand comprises a compound having an imidazole skeleton.

5. The resin composition according to claim 4, wherein the compound having an imidazole skeleton is 2-methylimidazole.

6. The resin composition according to claim 1, wherein the resin composition comprises at least the metal-organic framework in which the metal ion is an alkali metal ion, and the organic ligand comprises a cyclodextrin-based compound.

7. The resin composition according to claim 6, wherein the alkali metal ion is a potassium ion.

8. The resin composition according to claim 6, wherein the cyclodextrin-based compound is α-cyclodextrin or γ-cyclodextrin.

9. The resin composition according to claim 1, wherein the resin composition comprises at least the metal-organic framework in which the metal ion is a copper ion, and the organic ligand comprises a compound having a monocyclic or polycyclic skeleton.

10. The resin composition according to claim 9, wherein the compound having a monocyclic or polycyclic skeleton is trimesic acid.

11. A dispersion comprising a metal-organic framework and a dispersant, the metal-organic framework being a cyclic or cage-like metal-organic framework in which at least one type of organic ligand is coordinated to at least one type of metal ion.

12. The dispersion according to claim 11, wherein the dispersant is at least one selected from polyvinyl alcohol, an amino acid, phosphoric acid, or polyallylamine.

13. The dispersion according to claim 11, wherein a content ratio (mass ratio) of the metal-organic framework to the dispersant is from 1:1 to 1:30.

14. The dispersion according to claim 11, wherein a dispersion medium is water and/or an alcohol solvent.

15. The dispersion according to claim 11, wherein the dispersion comprises at least the metal-organic framework in which the metal ion is a zinc ion, and the organic ligand comprises a compound having an imidazole skeleton.

16. The dispersion according to claim 15, wherein the compound having an imidazole skeleton is 2-methylimidazole.

17. The dispersion according to claim 11, wherein the dispersion comprises at least the metal-organic framework in which the metal ion is an alkali metal ion, and the organic ligand comprises a cyclodextrin-based compound.

18. The dispersion according to claim 17, wherein the alkali metal ion is a potassium ion.

19. The dispersion according to claim 17, wherein the cyclodextrin-based compound is α-cyclodextrin or γ-cyclodextrin.

20. The dispersion according to claim 11, wherein the dispersion comprises at least the metal-organic framework in which the metal ion is a copper ion, and the organic ligand comprises a compound having a monocyclic or polycyclic skeleton.

21. The dispersion according to claim 20, wherein the compound having a monocyclic or polycyclic skeleton is trimesic acid.
